# EUROPÄISCHE PATENTANMELDUNG

(11) **EP 0 711 947 A1**
(43) Veröffentlichungstag der Anmeldung: **15.05.1996**
(21) Anmeldenummer: 95890176.1
(22) Anmeldetag: 05.10.1995
(51) Int. Cl.: F16L 47/00, F16K 27/02, B29C 37/00, F24D 3/10, F24H 9/12

(54) **Absperrventil für Kunststoff-Rohrleitungen**

(30) Priorität: 08.11.1994 AT 2065/94
(71) Anmelder: Wolf, Helmut, A-4240 Waldburg b. Freistadt (AT)
(72) Erfinder: Wolf, Helmut, A-4240 Waldburg b. Freistadt (AT)
(74) Vertreter: Hübscher, Heiner, Dipl.-Ing.

(57) **Zusammenfassung**

Ein Absperrventil für Kunststoff-Rohrleitungen besitzt ein metallisches, den Ventilsitz (2) bildendes Ventilgehäuse (1). Dieses Ventilgehäuse (1), das sich lediglich in Richtung der Ventilspindel erstreckt, weist ein Innengewinde (3) zum Einschrauben des die Ventilspindel mit dem Ventilteller führenden Ventilkörpers auf. Das metallische Ventilgehäuse (1) ist mit Kunststoff zu einem einen Einund Auslaßstutzen (5) aufweisenden Formkörper (4) umgossen bzw. umspritzt, wobei Ringrillen (6) zur besseren Verankerung im Kunststoff dienen. Das Ventilgehäuse (1) besitzt eine Sicherung gegen Verdrehung im Formkörper (4). Um die Sicherung gegen Verdrehung zu verbessern, weist das Ventilgehäuse (1) wenigstens über einen Teil seiner Länge innerhalb des Formkörpers (4) einen außen eckigen Querschnitt auf, ist also als Prisma, beispielsweise als Sechskant, ausgebildet.

## Beschreibung

Die Erfindung betrifft ein Absperrventil für Kunststoff-Rohrleitungen mit einem metallischen, den Ventilsitz bildenden und ein Innengewinde zum Einschrauben des die Ventilspindel mit dem Ventilteller führenden Ventilkörpers aufweisenden Ventilgehäuse, das mit Kunststoff zu einem einen Ein- und Auslaßstutzen aufweisenden Formkörper umgossen bzw. umspritzt ist, wobei sich das Ventilgehäuse lediglich in Richtung der Ventilspindel erstreckt und eine Sicherung gegen Verdrehung im Formkörper besitzt.

Ein solches Absperrventil ist bereits bekannt (z.B. DE 88 10 285 U1). Nun muß nach längerem Gebrauch manchmal der Ventilkörper abgeschraubt werden, wobei aber der Ventilkörper im Ventilgehäuse durch Korrosion od.dgl. festsitzt, so daß höhere Drehmomente aufgebracht werden müssen, was wiederum ein Lockern und damit Undichtwerden des Ventilgehäuses im Kunststofformkörper zur Folge haben kann. Daher ist das Ventilgehäuse mit der Sicherung gegen Verdrehung im Formkörper versehen. Bei dem bekannten Absperrventil besteht diese Verdrehsicherung jedoch aus im stirnseitigen Ende des Ventilgehäuses angeordneten Vertiefungen in Form von Schlitzen, Bohrungen u.dgl. und auf der äußeren Oberfläche des Gehäuses vorgesehenen Vertiefungen in Form von Schlitzen, Bohrungen u.dgl., die mit den stirnseitigen Vertiefungen zumindest teilweise in Verbindung stehen und in die der Kunststoff eindringt. Diese in die Vertiefungen eingedrungenen Kunststoffteile sind aber vergleichsweise schwach, so daß es trotz der vorgesehenen Verdrehsicherung zu einem Lockern des Ventilgehäuses im Formkörper kommen kann, wenn bei festgefressenem Ventilkörper im Ventilgehäuse der Ventilkörper herausgeschraubt werden muß.

Es ist auch schon bekannt (DE 90 03 116 U1), das Ventilgehäuse T-förmig zu gestalten, um dadurch den drehfesten Sitz im Kunststoff zu erreichen, jedoch erhöht die T-Form den Materialaufwand und die Gesamtabmessungen des Ventils.

Somit besteht die Aufgabe der Erfindung darin, eine Ausbildung eines Absperrventils der eingangs geschilderten Art zu schaffen, bei der eine Lockerung des Ventilgehäuses im Formkörper beim Aufbringen eines hohen Drehmoments auf den Ventilkörper ohne Zerstörung des ganzen Ventils bzw. Formkörpers ausgeschlossen ist, ohne für das Ventilgehäuse einen erhöhten Materialaufwand zu benötigen.

Diese Aufgabe wird erfindungsgemäß dadurch gelöst, daß das Ventilgehäuse wenigstens über einen Teil seiner in Richtung der Ventilspindel gemessenen Länge innerhalb des Formkörpers einen außen eckigen Querschnitt aufweist, also als Prisma, beispielswiese als Sechskant, ausgebildet ist.

Bei einer solchen Form des Ventilgehäuses, das ja vom Kunststoff des Formkörpers voll und dicht umschlossen wird, ist eine nachträgliche Verdrehung des Ventilgehäuses im Formkörper unmöglich, obwohl sich das Ventilgehäuse nur in Richtung der Ventilspindel erstreckt, weil das Ventilgehäuse keinen Rotationskörper darstellt. Zur sicheren Verankerung des Kunststoffes am umspritzten Ventilgehäuse, kann dieses mit u.U. hinterschnittenen Ringrillen versehen werden.

In der Zeichnung ist der Erfindungsgegenstand beispielsweise dargestellt, und zwar zeigen
- Fig. 1: ein Absperrventil für Kunststoff-Rohrleitungen im Axialschnitt und
- Fig. 2: im Querschnitt nach der Linie II-II der Fig. 1.

Das Absperrventil besitzt ein metallisches Ventilgehäuse 1, das den Ventilsitz 2 bildet und mit einem Innengewinde 3 versehen ist. In dieses Innengewinde wird der nicht dargestellte Ventilkörper mit der den Ventilteller tragenden Ventilspindel eingeschraubt. Dieses metallische Ventilgehäuse 1 ist mit Kunststoff zu einem Formkörper 4 umspritzt bzw. umgossen, der Ein- und Auslaßstutzen 5 für den Einbau in ein Kunststoff-Rohrleitungssystem aufweist. Zur besseren Verankerung des Kunststoffes im umspritzten Ventilgehäuse 1 ist letzteres mit Ringrillen 6 versehen.

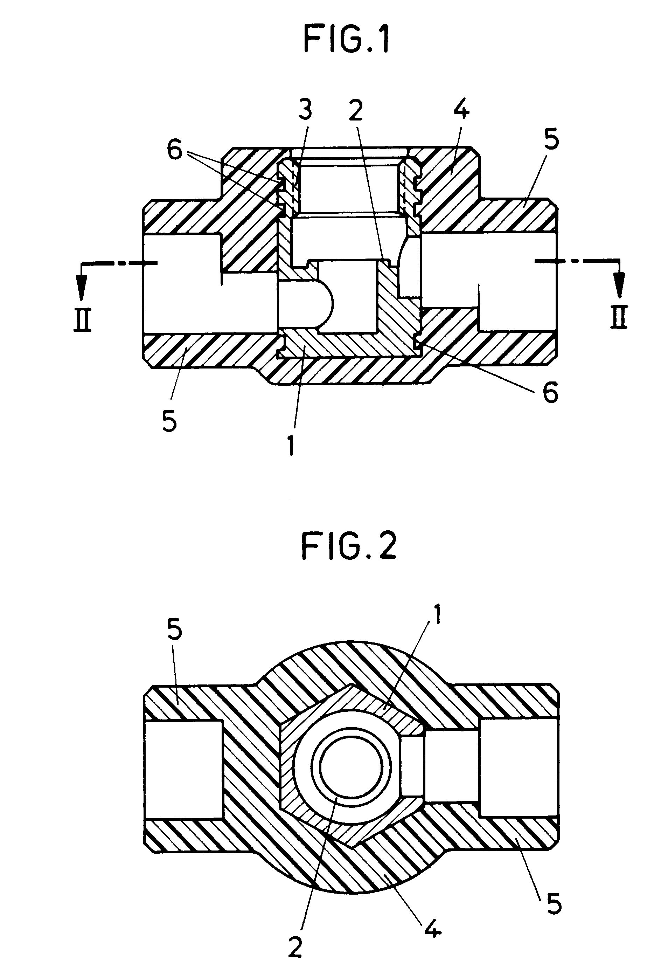

Wie aus Fig. 2 ersichtlich, ist das Ventilgehäuse 1 über seine ganze Länge außen als sechskantiges Prisma ausgebildet, besitzt also einen außen eckigen Querschnitt und ist dadurch im Formkörper 4 unverdrehbar gehalten.

## Patentansprüche

1. Absperrventil für Kunststoff-Rohrleitungen mit einem metallischen, den Ventilsitz (2) bildenden und ein Innengewinde (3) zum Einschrauben des die Ventilspindel mit dem Ventilteller führenden Ventilkörpers aufweisenden Ventilgehäuse (1), das mit Kunststoff zu einem einen Ein-und Auslaßstutzen (5) aufweisenden Formkörper (4) umgossen bzw, umspritzt ist, wobei sich das Ventilgehäuse lediglich in Richtung der Ventilspindel erstreckt und eine Sicherung gegen Verdrehung im Formkörper (4) besitzt, dadurch gekennzeichnet, daß das Ventilgehäuse (1) wenigstens über einen Teil seiner in Richtung der Ventilspindel gemessenen Länge innerhalb des Formkörpers (4) einen außen eckigen Querschnitt aufweist, also als Prisma, beispielsweise als Sechskant, ausgebildet ist.
